Europäisches Patentamt

European Patent Office

Office européen des brevets

(19)

(11) Numéro de publication: **0 191 704**
**A1**

(12) # DEMANDE DE BREVET EUROPEEN

(21) Numéro de dépôt: **86420010.0**

(22) Date de dépôt: **09.01.86**

(51) Int. Cl.⁴: **A 01 K 49/00**

(30) Priorité: **14.01.85 FR 8500616**

(43) Date de publication de la demande: **20.08.86**
**Bulletin 86/34**

(84) Etats contractants désignés: **BE CH DE GB IT LI**

(71) Demandeur: **Martin, Alain, 25 boulevard de l'Europe, F-69600 Oullins (FR)**

(72) Inventeur: **Martin, Alain, 25 boulevard de l'Europe, F-69600 Oullins (FR)**

(74) Mandataire: **Laurent, Michel et al, 20 rue Louis Chirpaz Boîte postale no. 32, F-69131 Ecully Cedex (FR)**

(54) **Boîte pour apiculture permettant la création d'une colonie d'abeilles, changement de reine d'une ruche en activité et le blocage partiel de la ponte.**

(57) L'invention concerne une boîte (1) pour apiculture entièrement encastrable dans une hausse ou dans un corps de ruche de telle façon que tout cadre dont elle est garnie prenne la place d'un cadre de ladite hausse ou dudit corps de ruche; elle peut être équipée d'accessoires spécialement conçus: grille à reine (7) comportant une ouverture obturable (36) par un film plastique coulissant, film plastique d'obturation (4) d'une ouverture (21) pratiquée dans le fond (22).

EP 0 191 704 A1

La présente invention concerne une boîte entièrement encastrable dans une hausse ou dans un corps de ruche, dans laquelle sont introduits des cadres qui prennent la place de cadres de la hausse ou du corps de ruche dans lesquels elle s'encastre, ainsi que ses applications dans le domaine apicole.

Plus précisément, l'invention concerne le moyen décrit ci-dessus, son application comme moyen de conditionnement de colonies d'abeilles en activité dont la reine ne cesse de pondre, en particulier dans les opérations de transfert d'abeilles et de remérage.

En effet, en présence d'une colonie de production en activité, dont la capacité de ponte de la reine devient déficiente, il peut être avantageux de changer cette dernière d'une façon contrôlée.

Cela nécessite l'isolement d'une reine à partir d'une seconde colonie, son transfert sur le lieu où doit s'effectuer le changement, et son introduction dans la première colonie, après élimination de la reine déficiente.

Communément, le transfert d'un lieu à un autre, d'une reine accompagnée ou non par un nombre important d'ouvrières, se fait actuellement selon trois modes principaux de réalisation :

- Soit en ruchette avec des cadres, des provisions, du couvain, et renfermant généralement la moitié de la colonie présente, dans les types habituels de ruche, comme par exemple la ruche DADANT et la ruche LANGSTROTH.

Ce mode de transfert présente l'inconvénient d'obliger le déplacement d'une forte quantité d'abeilles et impose à l'apiculteur un matériel qui peut excéder celui auquel il désire se limiter ; l'emballage peut également être perdu.

Ce mode est, en pratique, uniquement réservé pour augmenter son nombre de ruches de production.

De plus, la forte proportion d'abeilles ouvrières enfermées autour de la reine entraîne un risque non négligeable de destruction de la colonie d'abeilles, et en particulier de la reine par étouffement.

- Soit en cage d'expédition de reine, comme la cage BENTON, ou la cage MILLER.

Ce transfert se caractérise par un nombre réduit d'abeilles en présence de la reine et de provisions, mais en l'absence de cadres, et en l'absence de couvain.

Il présente l'inconvénient de l'arrêt de ponte de la reine, ce qui entraîne non seulement une période de réadaptation, de cette reine à la ponte, hors de la colonie à remérer, mais aussi un risque certain d'affaiblissement irréversible de la capacité de ponte lorsque la reine sera dans son nouvel environnement.

La reine ne se trouve pas dans un milieu ambiant convenant au mieux à sa survie.

- Soit selon un mode qui se voudrait un compromis simplificateur des deux modes ci-dessus décrits, et qui consiste à réaliser le premier sans cadre et sans couvain.

Il cumule les inconvénients des deux modes dont il dérive, ce qui ne peut justifier les avantages de meilleure chance de survie dans le milieu ambiant au cours du transfert, et d'adaptation plus rapide dans le milieu d'accueil.

Ainsi, actuellement, les procédés pour transférer une reine d'un lieu de vie donné à un autre, et en vue de son introduction dans une nouvelle colonie, ne permettent pas simultanément d'assurer la poursuite de la ponte en sécurité pour la reine, et de réaliser avec une quasi certitude l'acceptation de cette reine par sa nouvelle colonie ; tout ceci avec une simplicité de l'opération lors de sa réalisation, pour un faible coût pour l'acquéreur de cette reine, et sans matériel excessif et encombrant, et ou non réutilisable.

Références : Pierre JEAN PROST "APICULTURE", EDITIONS J.B. BAILLIERE (1977), pages 303, 316, 317, 371, 344, 345, 347, 348.

Par exemple, en ce qui concerne plus particulièrement les difficultés pratiques et les coûts de telles opérations, ils se situent également au niveau des règlements de sécurité, de limitation de poids et de volume en vigueur, dans le cas précis de transfert postal.

La boîte selon l'invention permet de pallier les inconvénients des moyens de transfert utilisés jusqu'à maintenant et évite des opérations intermédiaires et laborieuses souvent risquées, connues de l'homme de métier lors de l'introduction d'une reine dans une nouvelle colonie.

Son seul emploi permet de réaliser le passage de la reine, sans arrêt de ponte d'un/milieu ambiant initial au milieu ambiant qui doit la renfermer, le transfert dans ce milieu ambiant d'un lieu en un autre, sans arrêt de ponte, le passage de la reine du milieu ambiant qu'elle renferme au milieu ambiant à remérer.

Mais la boîte ne se limite pas à ce seul usage.

Une autre caractéristique importante de la présente invention réside dans le fait qu'elle permet le blocage partiel de la ponte de la reine.

En effet, il peut être avantageux de limiter volontairement et

0191704

momentanément la quantité de couvain d'une colonie d'abeilles ; aussi bien pour éviter l'essaimage que pour accroître la récolte ; phénomène bien connu en apiculture.

C'est également une méthode couramment utilisée pour l'élevage des reines.

De plus, le blocage de la ponte en présence de la Varroase, qui est une maladie provoquant à terme la mort de la colonie s'il n'y a pas de traitement, est un moyen efficace de lutte biologique.

Il prépare obligatoirement le terrain pour un traitement par produit chimique, qui est encore plus efficace contre les acariens.

Communément, ce blocage partiel de ponte s'effectue de plusieurs manières, suivant la durée désirée et le but fixé :

— Soit sur quelques cadres de la ruche, qui sont séparés par une ou des grilles à reine verticales ; ce qui empêche la reine d'étendre sa ponte à l'ensemble des cadres de la ruche ; c'est ce qu'on appelle également une chambre à réclusion.

La manipulation des cadres et des grilles à reine reste délicate et pénible. Elle est surtout réservée à l'élevage des reines.

— Soit en bloquant la reine dans une hausse ou un corps entier, séparés par des grilles à reine horizontales.

Cette méthode nécessite une mise en oeuvre laborieuse et n'est pas toujours efficace à cause du nombre important de cadres où la reine peut continuer à pondre abondamment.

— Soit en enfermant la reine dans une cage JONES qui se caractérise par un petit compartiment cylindrique de quelques centimètres carrés, incrusté sur la face d'un cadre de ruche. Elle permet à la reine de continuer de pondre quelques oeufs. Mais son emploi ne peut qu'être très limité dans le temps. Les alvéoles libres pour la ponte sont très vite remplies; la ponte de la reine au bout de quelques heures se trouve complètement arrêtée. C'est surtout un moyen d'introduction d'une nouvelle reine dans une ruche.

Ainsi actuellement les méthodes et le matériel utilisés sont différents selon que l'on veut obtenir un blocage partiel de la ponte de courte ou de longue durée, selon le résultat recherché et selon la saison. De plus, ces opérations lors de leur réalisation sont souvent de mise en oeuvre laborieuse et délicate ; elles nécessitent du matériel supplémentaire.

Références : Revue "SANTE DE L'ABEILLE" n° 74 (1983), page 87, et livre Pierre JEAN PROST "APICULTURE", Edition J.B. BAILLIERE (1977), pages 341, 342, 343, 370.

La boîte, par son usage, permet de pallier, selon l'invention, les inconvénients des divers moyens de blocage partiel de la ponte d'une reine, qui sont utilisés couramment de nos jours ; elle simplifie beaucoup le travail à l'apiculteur. C'est enfin, un outil et un moyen nouveau de lutte contre la Varroase.

Une autre caractéristique intéressante de la présente invention, réside dans la possibilité de formation de micro-nucléus dans la boîte, pour la fécondation de jeunes reines vierges ; et en vue de leur transfert ultérieur et introduction dans une ruche orphelinée.

Ces nucléus peuvent être regroupés à plusieurs dans une hausse ou un corps de ruche, chacun ayant un trou de vol indépendant. Ils profitent alors de la chaleur des colonies voisines ; on peut également superposer plusieurs hausses ou corps contenant plusieurs boîtes de nucléus ; ou faire profiter à ces nucléus de la chaleur de colonies de production.

Plus précisément, la boîte selon l'invention, permet le regroupement de plusieurs nucléus et leur survie durant l'hivernage.

En effet, il est bien connu que sous des climats relativement rigoureux, il est difficile, voire impossible, de faire survivre de petites colonies possédant moins de 1 Kg d'abeilles, sans les regrouper durant l'hiver.

Référence au livre du Frère ADAM "MA METHODE D'APICULTURE", Edition Le Courrier du Livre, (1980), pages 28 et 87.

L'invention concerne donc une boite pour apiculture permettant la création d'une petite colonie d'abeilles (dénommée couramment nucléus), le changement de reine d'une ruche en activité et le blocage partiel de la ponte, ladite boite étant caractérisée par le fait qu'elle se présente sous la forme d'une enceinte parallélépipédique, encastrable dans une hausse ou dans un corps de ruche au lieu et place d'un certain nombre de cadres disposés normalement dans ledit corps ou ladite hausse, cette enceinte :

a) étant garnie d'une pluralité de cadres verticaux, parallèles, espacés les uns des autres ainsi que du fond d'une distance suffisante pour permettre la circulation des abeilles et de la reine,

b) comportant au moins un trou de vol, sur au moins une de ses parois, ledit trou étant obturé lorsque la boite est mise en place dans la ruche et étant situé en regard de l'espace libre compris entre deux cadres disposés dans ladite boite ;

c) le fond de l'enceinte étant fixe alors que le couvercle est amovible, ces deux éléments comportant une ouverture dont les dimensions sont telles qu'elles permettent au moins le passage de la reine ainsi que, si nécessaire, le mélange en moins de douze heures de la colonie d'abeilles contenue dans la ruche avec une autre colonie préalablement formée ou introduite dans ladite boite,

d) le fond comportant également deux fentes disposées de part  et d'autre de l'ouverture qu'il présente, ces fentes étant situées à proximité de deux parois opposées et ayant une longueur supérieure à la largeur de ladite ouverture ;

e) éventuellement un grillage amovible, dont les mailles ont une dimension inférieure à trois millimètres, ledit grillage pouvant être disposé entre le couvercle et le dessus des cadres disposés à l'intérieur de la boite et dont les dimensions correspondent aux dimensions intérieures de ladite boite ;

f) un volet amovible permettant d'obturer, si nécessaire, l'ouverture et les fentes pratiquées dans le fond de ladite boite ; avantageusement, un tel volet amovible peut simplement être maintenu par simple emboitement contre le fond de la boite, voire être monté coulissant contre ledit fond.

Par ailleurs, si les parois de la boite sont avantageusement planes, ces parois pourraient comporter des parties en relief, par exemple lorsque la boite est réalisée en métal, ces parties en relief  permettant, d'une part, de maintenir les cadres espacés les uns des autres à l'intérieur de la boite et, d'autre part, permettant le passage des crampons prévus sur la paroi interne de la ruche et qui permettent le passage des abeilles.

Par ailleurs, les cadres disposés à l'intérieur de la boite sont des cadres conventionnels qui comportent donc une partie supérieure ou tête  qui déborde latéralement. Dans un

0191704

tel cas, chaque tête de cadre repose dans une encoche pratiquée sur le bord supérieur de deux parois opposées de la boite.

Bien que la boîte selon l'invention puisse être conçue pour être garnie d'un nombre de cadres égal à tout nombre de cadres de la hausse ou du corps de ruche dans lequel ou laquelle elle est encastrable, un mode de réalisation préférée de l'invention est une boîte dont le nombre de cadres qui la garnit est limité et est généralement au plus égal à 6, de préférence 2,3 ou 4 quand le nombre de cadres de la hausse ou du corps de ruche dans laquel ou lequel elle s'encastre est égal ou supérieur à 6.

La boîte selon l'invention peut être équipée d'accessoires spécialement adaptés tels qu'une grille à reine qui se pose sur le fond et dans laquelle est pratiquée une ouverture obturable par un film plastique qui peut être éliminé par coulissement dans deux fentes pratiquées dans la grille à reine de part et d'autre de l'ouverture, un film plastique qui sert à obturer les parties supérieures et inférieures de l'ouverture pratiquée dans le fond de la boîte et qui passe dans deux fentes pratiquées de part et d'autre de cette ouverture.

Les espaces entre la boîte et les parois intérieures de la hausse ou du corps de ruche dans laquelle ou lequel elle s'encastre, ainsi que les espaces entre les cadres et les parois intérieures de la boîte sont de quelques millimètres. Il est bien entendu que les abeilles ont tendance à colmater des espaces inférieurs à trois millimètres. Le matériau utilisé est donc primordial pour éviter ce genre d'inconvénient.

La présente invention prévoit la réalisation de boîtes en matériau sur lequel la cire ou la propolis adhère le moins possible. Il est bien connu que certaines matières plastiques ainsi que certains métaux, tel que l'aluminium, sont difficilement recouverts de propolis ou de cire. Le bois traité convenablement reste un materiau évidement très acceptable.

Purement à titre d'exemple, une ultime précaution peut être prise en entourant la boîte d'une housse en film plastique ou d'une feuille d'aluminium afin d'éviter tout collage de la boîte et de permettre une manipulation aisée de celle-ci. Il faut veiller à ce que les ouvertures du couvercle et du fond de la boîte, ainsi que les trous de vol ne soient pas bouchés par ces feuilles.

Enfin, l'espace entre la barrette inférieure des cadres de la boîte et le fond de celle-ci, est au moins de 5 mm, aussi bien quand la boîte est équipée de sa grille à reine et ou de film plastique, avec ou non le volet. Cet espace ne peut être comblé par les abeilles ; il permet

à la reine et aux ouvrières de circuler sur le fond de la boîte et de passer d'un cadre à l'autre.

D'autres détails de conception de la boîte et des accessoires selon l'invention ressortiront de la description donnée à titre indicatif et non limitatif en référence aux dessins.

- la figure 1 est une vue générale éclatée de la boîte. Celle-ci est coupée longitudinalement et verticalement, ainsi que divers accessoires dont le couvercle amovible 2, le grillage 6, la grille à reine 7, le film plastique 4, le volet 3.

- la figure 2 est une vue en coupe longitudinale et verticale de la boîte ; celle-ci est munie de ses divers accessoires et d'un cadre de ruche.

- la figure 3 est une vue du fond extérieur de la boîte ; celle-ci est équipée d'une grille à reine intérieurement et posée sur le fond ; un film plastique recouvre partiellement la grille à reine ; un deuxième film plastique recouvre le fond de la boîte.

- la figure 4 est la même vue du fond extérieur de la boîte que la figure 3, avec en plus une feuille de papier scotchée.

- la figure 5 est la même vue du fond extérieur de la boîte que la figure 3 et 4, mais le fond est muni de son volet.

- la figure 6 est une vue de dessus du couvercle amovible du haut de la boîte ; le couvercle est muni d'un grillage.

- la figure 7 est une vue détaillée en coupe longitudinale et verticale du fond de la boîte et de ses divers accessoires.

- la figure 8 est une vue de la face avant de la boîte, à l'extérieur ; la boîte est coupée verticalement.

- la figure 9 est une vue de la face avant de la boîte, à l'intérieur de cette dernière ; la boîte est coupée verticalement.

- la figure 10 représente une vue générale éclatée, d'un cas particulier de modèle de ruche. Cette ruche est caractérisée par deux corps identiques, et par un seul type de cadres. La boîte, conformément à la présente invention est encastrée dans un corps. C'est un cas particulier de boîte qui renferme trois cadres de corps.

- la figure 11 représente une vue générale éclatée d'un cas particulier de modèle de ruche. Cette ruche est caractérisée par un corps et une hausse, et par deux types de cadres. La boîte, conformément à la présente invention, est encastrée dans la hausse. C'est un cas particulier de boîte qui renferme trois cadres de hausse.

Cette boîte 1 possède un fond solidaire 22, avec une ouverture 21, ainsi qu'un couvercle amovible 2, avec une ouverture 10, identique à celle du fond. Les parois avant 13, et arrière 14, sont percées de trous 26 et 19, symétriques, qui peuvent servir de trous de vol ; ceux-ci sont obturés par des bouchons amovibles 0. Ces parois sont munies intérieurement de glissières 17, qui permettent aux cadres 40 d'être guidés. Les cadres sont séparés en haut par des crémaillères 15 ; et l'écartement entre cadres est maintenu du haut en bas, par une bande d'écartement 20. Les têtes de cadres 39 sortent de la boîte, et reposent sur les parois avant et arrière de la boîte, dans des encoches 16. Pour le transfert, et en vue de son introduction dans une ruche à remérer, la boîte, selon l'invention, munie de ses cadres, avec des provisions, d'abeilles, et d'une reine en ponte, est équipée d'un dispositif particulier que l'on va maintenant décrire.

Un grillage 6 à fine maille, de même dimension que l'intérieur de la boîte, est posé sur les cadres. On dépose alors le couvercle 2 sur ce grillage. Le couvercle s'encastre entre les parois 11 et 12 de la boîte. IL est percé de deux fentes 9 et 29 identiques et symétriques aux fentes 35 et 23 du fond de la boîte. Ce couvercle est immobilisé aux quatre coins par quatre encoches 34, qui s'emboîtent dans quatre tétons 18, à chaque coin à l'intérieur de la boîte.

Ces quatre tétons sont le prolongement de bandes d'écartement entre les cadres et les côtés latéraux de la boîte. Le fond ajouré est percé de deux fentes 35 et 23, similaires et symétriques, et de longueur presque identique à la largeur du fond de la boîte. On introduit dans ces fentes un film plastique 4 qui obture complètement l'ouverture du fond aussi bien intérieurement 28, qu'extérieurement 30. Ce film est tendu, et ses deux bords 27, sont collés avec du ruban adhésif 8. On recouvre ce film plastique avec une feuille de papier 5 de faible épaisseur 33 ; on la fixe avec du ruban adhésif 41, sur les côtés latéraux du fond de la boîte.

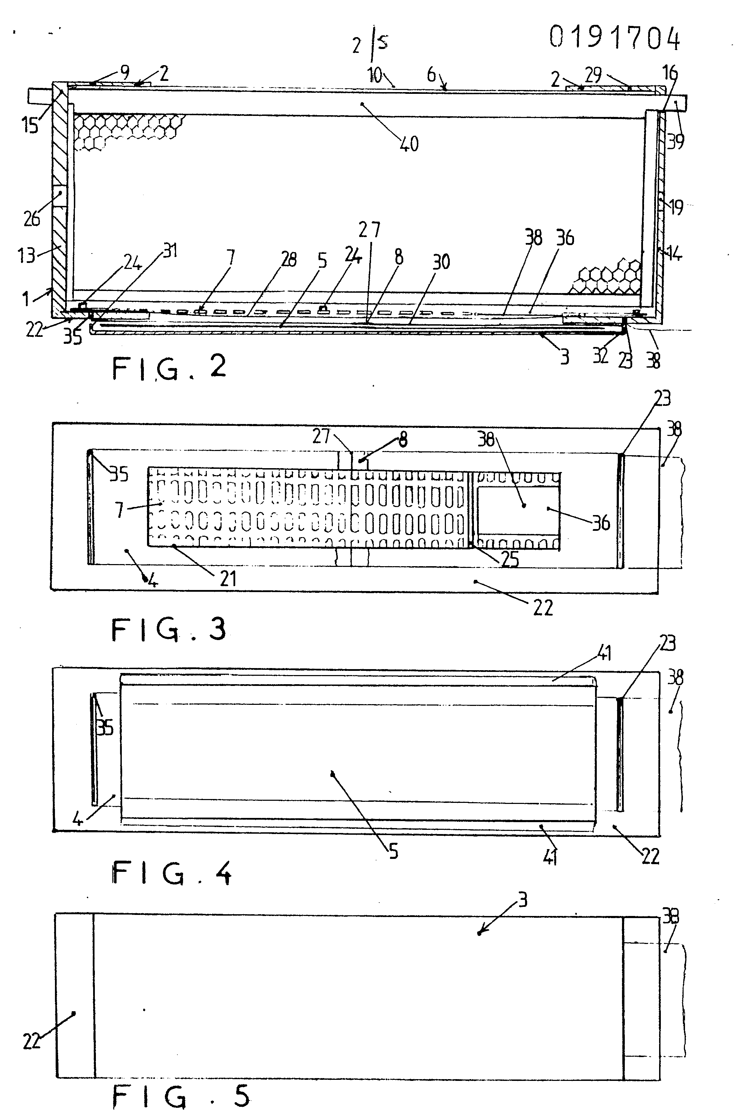

Comme on le voit clairement sur la figure 4, les fentes, ainsi qu'une partie suffisante du film plastique, ne sont pas recouvertes par le papier. La feuille de papier est posée, puis fixée de telle façon que le film plastique puisse coulisser facilement sans endommager le papier.

Un volet 3, vient s'appliquer extérieurement sur le fond de la boîte. Deux pattes 31 et 32 de ce volet, viennent s'emboîter dans les fentes 35 et 23. Il est à noter que ce volet 3 peut également s'emboîter extérieurement sur le couvercle 2 dans les fentes 9 et 29. Le papier, qui est pris en sandwich entre le film plastique tendu et le volet, est ainsi hors d'atteinte des abeilles. Le couvercle amovible et ajouré da

haut de la boîte, ainsi que le volet 3 du fond peuvent être fixés solidement, avec du ruban adhésif renforcé. On assure ainsi une meilleure sécurité durant le transfert.

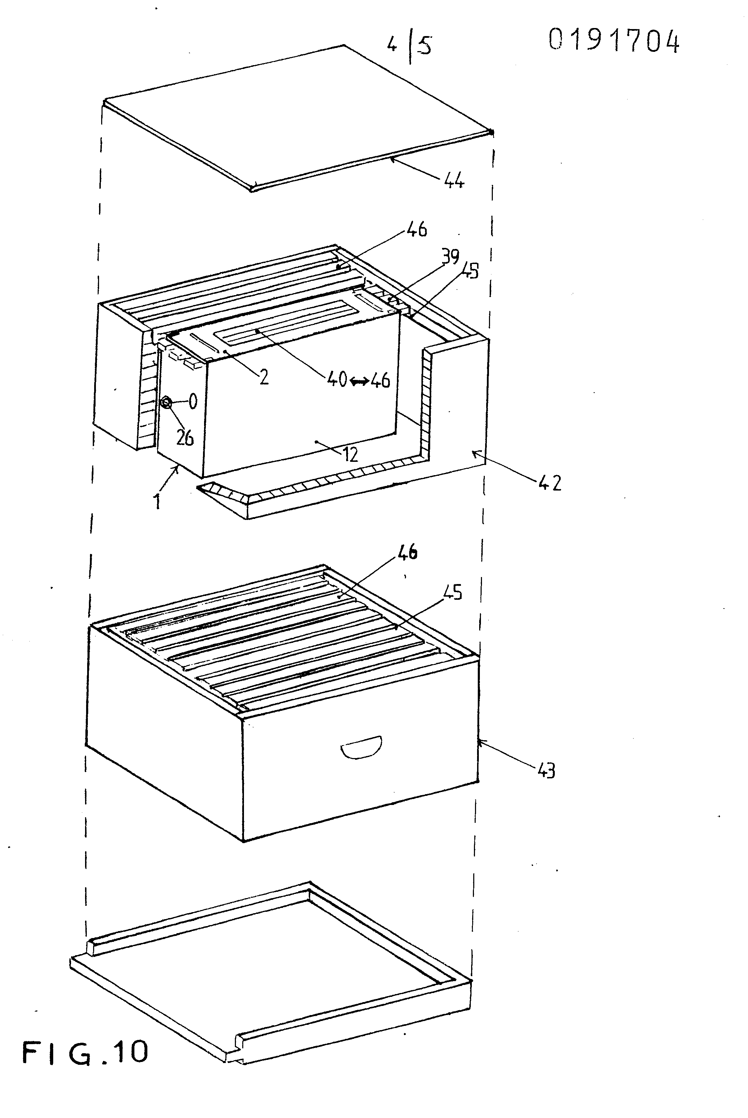

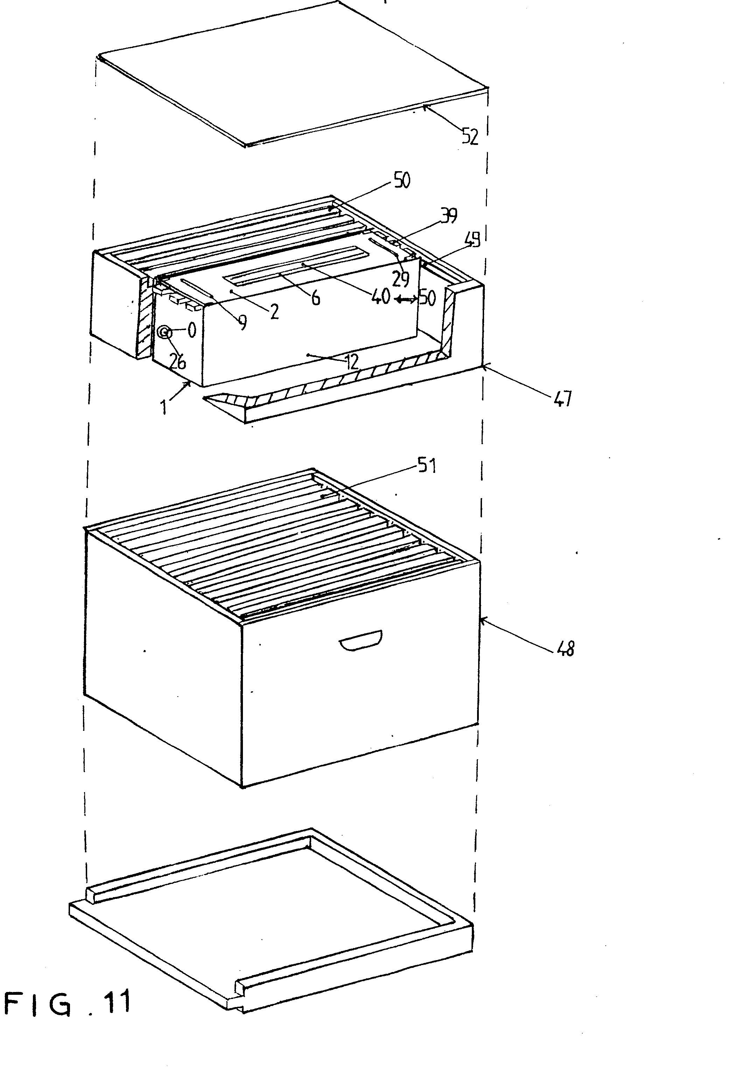

L'introduction de la boîte dans une ruche à remérer est précédée par la recherche, puis l'enlèvement de la reine indésirable, d'une façon connue. Pour préparer le remérage à l'aide de la boîte selon l'invention, on enlève alors le volet du fond de la boîte, on coupe le film plastique, puis on tire sur celui-ci. Il coulisse sous la feuille de papier, mettant ainsi les abeilles en contact avec le papier. Il faut faire bien attention à ne pas abimer le papier lors de la manipulation. On encastre la boîte suivant le modèle de cadre comme par exemple 50 ou 46 ou 51, soit dans une hausse comme 47 qui ne contient que des cadres vides et sans abeille, soit dans un corps de ruche comme 42 ou 48, équipé de la même façon. Les têtes de cadre qui dépassent de la boîte, viennent se fixer sur les crémaillères 49 de la hausse, ou sur les crémaillières 45 du corps de ruche, conformément aux figures 10 et 11. L'écartement entre cadres 20 est en effet le même dans la boîte que dans la hausse ou le corps de ruche. La réunion des deux colonies s'effectue en général quelques heures après la pose de la boîte sur la colonie orpheline. La reine, qui n'a cessé de pondre, a de très grandes chances d'être acceptée comme nouvelle reine de la colonie récemment restructurée. Très rapidement, elle descend pondre dans le corps de ruche inférieur 43 ou 48, en passant par l'ouverture 21 du fond de la boîte.

Une autre particularité subtile de la présente invention réside en la possibilité de réunir les abeilles ouvrières de la boîte avec celles de la colonie à remérer, mais en retenant momentanément prisonnière la nouvelle reine toujours en ponte dans la boîte. En effet, dans certains cas, il peut être nécessaire de retarder volontairement le passage de la reine, de la boîte aux cadres de couvain de la ruche à remérer. Tout particulièrement après un transfert de longue durée, où l'utilisateur de cette boîte désire contrôler la présence et l'état de santé de la reine.

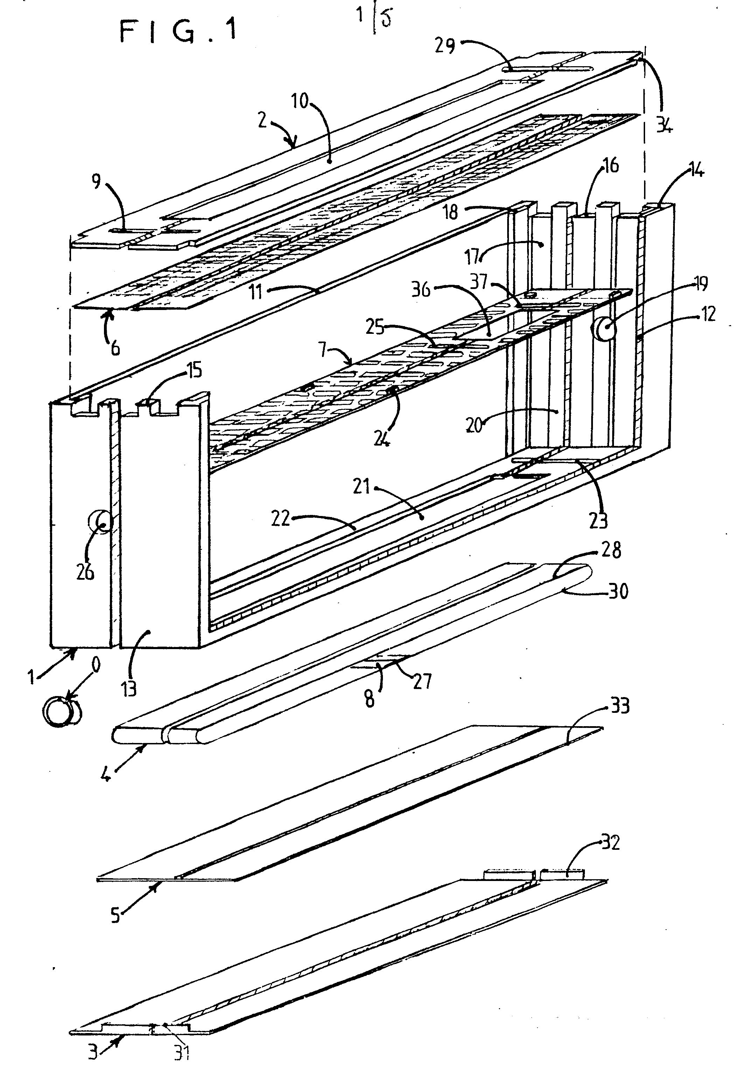

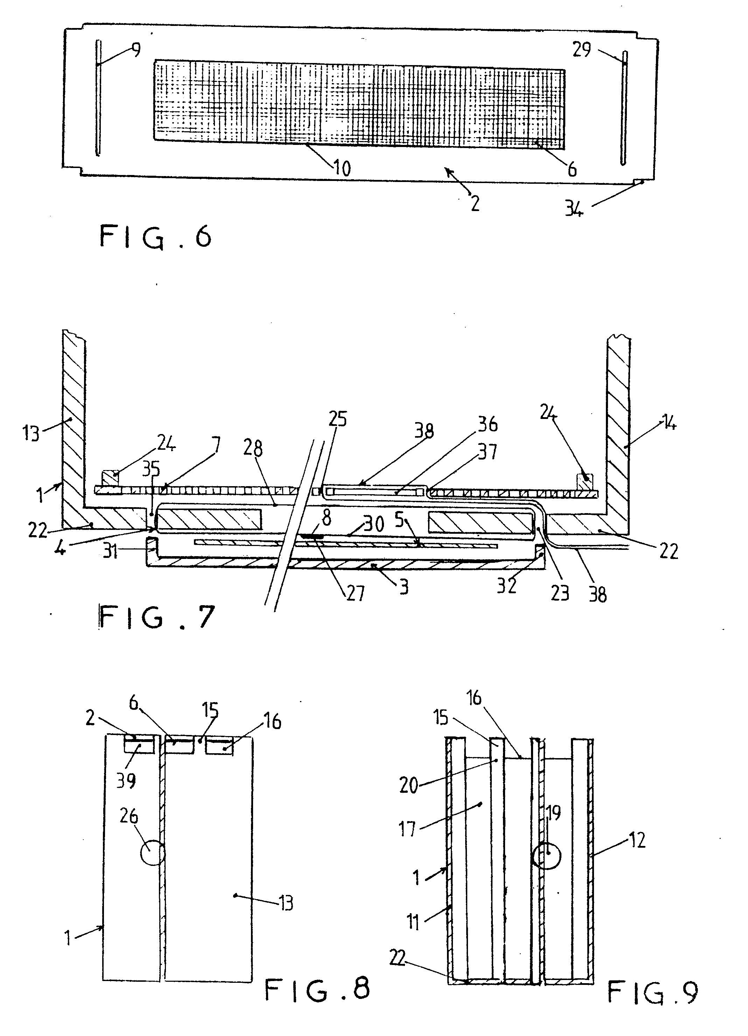

Comme le montrent les figures 1, 3, 4 et 7, la boîte selon l'invention, est alors équipée d'une grille à reine 7, en plastique et perforée, de même dimension que l'intérieur de la boîte et, de sa feuille de papier. La grille à reine est maintenue plaquée au fond de cette boîte, par plusieurs tétons proéminents 24, qui sont fixés sur la grille et sur lesquels reposent les barrettes inférieures des cadres. Cette grille à reine est munie d'une ouverture 36, à l'une de ses extrémités. De chaque côté avant ou arrière de cette ouverture, la grille à reine est percée de deux rainu-

0191704

res 25 et 37, de longueur supérieure à la largeur de l'ouverture pratiquée dans cette grille. Ces rainures permettent le passage d'un deuxième film plastique 38. Celui-ci recouvre entièrement l'ouverture de la grille à reine ; il coulisse dans les rainures 25 et 37, et ressort du fond de la boîte par la rainure 23. Après la destruction du papier et la réunion des abeilles des deux colonies, cette ouverture 36 peut être dégagée ultérieurement, en retirant le film plastique de l'extérieur de la boîte et plus particulièrement à l'extérieur de la ruche, sans ouvrir cette dernière. Le film coulisse également entre le corps 48 et la hausse 47, ou le corps 43 et 42 de la ruche. Par ce moyen, on permet à la reine de passer par cette ouverture ainsi libérée, de la boîte au nid à couvain de la ruche, et ceci au moment opportun.

De ce fait, la boîte est un moyen de blocage partiel de la ponte de la reine, de courte durée, pouvant aller de quelques heures à quelques jours.

Mais elle peut également servir pour bloquer la ponte sur une plus longue durée ; de quelques jours à quelques semaines, tout particulièrement en vue d'accroître la récolte et de prévenir l'essaimage, 10 jours avant le début de la miellée, on recherche la reine puis on l'enferme dans la boîte. Cette dernière est munie de sa grille à reine dont l'ouverture est obturée par le film plastique, de cadres, et de son couvercle amovible 2. On place la boîte dans une hausse ou dans un corps, sur la ruche de production de miel. On laisse dépasser le film plastique 38 entre la hausse et le corps, ou entre deux corps de ruche. Après plusieurs jours d'apports importants de miel dans la ruche, lors de la miellée, on libère la reine de la boîte, comme précédemment, pour qu'elle retourne pondre dans la partie centrale de la ruche. Le miel emmagasiné dans le nid à couvain bloque à son tour partiellement la ponte de la reine.

La boîte peut également servir pour stopper la prolifération de l'acarien Varroa Jacobsoni. On bloque la reine d'une ruche malade dans la boîte, comme précédemment, mais durant 21 jours et de préférence à l'automne. Le corps de ruche ne contient plus de couvain. Au moment du traitement, on élimine de la boîte les quelques cadres de couvain infectés. On peut libérer la reine à cet instant dans le corps de ruche, ou l'encager et la retirer de la ruche durant le traitement pour la mettre à l'abri des effets nocifs des produits chimiques.

Dans le cas où la reine n'a pas été libérée dans la ruche traitée, on peut la remettre dans la boîte avec des cadres vides. La boîte est toujours encastrée dans la hausse ou le corps; eux-mêmes posés sur la

ruche traitée. La reine est encore prisonnière de la boîte. Elle est séparée du corps de ruche par la grille à reine de la boîte. Cinq à dix jours après, on libère alors la reine, soit directement, soit par l'ouverture pratiquée dans la grille à reine par le dispositif du film plastique précédemment décrit. On élimine à cet instant les cadres de couvain de la boîte qui ont servi de piège aux derniers survivants des acariens.

Une dernière application de cette boîte, seulement esquissée jusqu'à présent, concerne la fécondation d'une reine vierge dans un nucléus, et sa conservation durant la saison froide. La boîte, selon l'invention est encastrée dans une hausse ou un corps de ruche. Le bouchon 0, qui est enlevé, dégage le trou 19 de la boîte. La hausse ou le corps doit être alors également percé d'un trou de vol, qui correspond exactement au trou de vol 19 ou 26 de la boîte. Le fond de la boîte est fermé par son volet, et il peut être équipé de son dispositif de libération de la reine en prévision de son transfert et de son introduction pour un remérage futur. Trois ou quatre boîtes, suivant le modèle, peuvent être mises côte à côte dans une hausse ou dans un corps de ruche, pour éviter les déperditions de chaleur. La hausse ou le corps est percé d'autant de trous de vol qu'il y a de boîtes.

Pour l'hivernage, quelques précautions sont à prendre pour éviter une trop forte condensation d'humidité sur les parois de la boîte. Il est conseillé de percer un deuxième trou dans la hausse 47, ou un deuxième trou dans le corps 42, symétrique au trou de vol de la paroi opposée. On met ainsi en communication le trou 26 de la boîte avec l'extérieur. On place sur le second trou de la hausse ou sur le second trou du corps, un fin grillage pour favoriser la ventilation de la boîte, tout en empêchant le passage des abeilles. Le couvercle amovible 2 de la boîte, est également équipé de son grillage. On recouvre les boîtes avec un couvre-cadres 44 ou 52 qui a la particularité d'absorber puis d'évacuer facilement l'humidité, tout en étant un bon isolant thermique, tel que l'isorel ou le carton.

Bien entendu, l'invention n'est pas limitée aux exemples de réalisation donnés précédemment mais elle en couvre toutes les variantes réalisées dans le même esprit. Ainsi, si dans les exemples précédents, le volet amovible susceptible d'être rapporté contre le fond de la boite afin d'obturer l'ouverture des fentes qu'il comporte est maintenu par simple emboitement, il pourrait être envisagé de réaliser
un tel volet afin qu'il puisse coulisser contre le fond.

De plus, si les parois de la boite conforme à l'invention
peuvent être planes, il est évident qu'elles peuvent avoir une autre configuration, par exemple avoir une succession de parties en
relief et en creux, réalisées afin de permettre le passage des parties proéminentes qui peuvent se trouver à l'intérieur du corps de
ruche.; de plus, de telles parties en relief peuvent également assurer le maintien des cadres à l'intérieur de la boite.

Par ailleurs, la grille à reine lorsqu'elle existe, peut être
montée coulissante contre le fond de la boite et éliminable par une
fente du fond située alors contre la paroi.

## REVENDICATIONS

1/ Boite pour apiculture permettant la création d'une petite colonie d'abeilles (dénommée couramment nucléus), le changement de reine d'une ruche en activité et le blocage partiel de la ponte, ladite boite étant <u>caractérisée</u> par le fait qu'elle se présente sous la forme d'une enceinte parallélépipédique, encastrable dans une hausse ou dans un corps de ruche au lieu et place d'un certain nombre de cadres disposés normalement dans ledit corps ou ladite haussé, cette enceinte :

a) étant garnie d'une pluralité de cadres verticaux, parallèles, espacés les uns des autres ainsi que du fond d'une distance suffisante pour permettre la circulation des abeilles et de la reine,

b) comportant au moins un trou de vol, sur au moins une de ses parois, ledit trou étant obturé lorsque la boite est mise en place dans la ruche et étant situé en regard de l'espace libre compris entre deux cadres disposés dans ladite boite ;

c) le fond de l'enceinte étant fixe alors que le couvercle est amovible, ces deux éléments comportant une ouverture dont les dimensions sont telles qu'elles permettent au moins le passage de la reine ainsi que, si nécessaire, le mélange en moins de douze heures de la colonie d'abeilles formée ou introduite dans ladite boite avec une seconde colonie ;

d) le fond comportant également deux fentes disposées de part et d'autre de l'ouverture qu'il présente, ces fentes étant situées à proximité ou contre deux parois opposées et ayant une longueur supérieure à la largeur de ladite ouverture ;

e) éventuellement un grillage amovible, dont les mailles ont une dimension inférieure à trois millimètres, ledit grillage pouvant être disposé entre le couvercle et le dessus des cadres disposés à l'intérieur de la boite et dont les dimensions correspondent aux dimensions intérieures de ladite boite ;

- 14 -

0191704

f) un volet amovible permettant d'obturer, si nécessaire, l'ouverture et les fentes pratiquées dans le fond de ladite boite ; avantageusement, un tel volet amovible peut simplement être maintenu par simple emboitement contre le fond de la boite, voire être monté coulissant contre ledit fond.

2/ Boite selon la revendication 1, caractérisée en ce que le nombre de cadres qui la garnissent est inférieure à 6.

3/ Boite selon la revendication 2, caractérisé en ce que le nombre de cadres qui la garnissent est compris entre 2 et 4.

4/ Boite selon la revendication 1, caractérisée par le fait que les cadres sont maintenus à l'intérieur de la boite par emboitement de la tête de cadre à l'intérieur d'une encoche pratiquée dans le bord supérieur des parois de la dite boite.

5/ Boite selon la revendication 1, caractérisée par le fait que ses parois sont lisses.

6/ Boite selon la revendication 1, caractérisée par le fait que ses parois comportent des parties en relief et en creux permettant de maintenir les cadres régulièrement espacés les uns des autres ainsi que de permettre le passage des éléments en relief qui peuvent être présents sur la face interne de la ruche.

7/ Boite selon la revendication 1, caractérisée en ce qu'elle est équipée d'un grille à reine posée sur le fond et dans laquelle est pratiquée une ouverture obturable par un film plastique qui est éliminable par passage coulissant dans une fente du fond et dans deux fentes pratiquées dans la grille à reine de part et d'autre de l'ouverture qu'elle comporte.

8/ Boite selon la revendication 1, caractérisée en ce qu'elle équipée d'un film plastique coulissant et éliminable qui obture les parties supérieures et inférieures de l'ouverture que ce fond comporte, et qui passe dans les deux fentes pratiquées de part et d'autre de ladite ouverture.

0191704

9/ Boite selon la revendication 7, caractérisée par le fait que la grille à reine est montée coulissante contre le fond de la boite et est éliminable par une fente du fond située alors contre la paroi.

FIG.1

0191704

1/5

FIG. 2

FIG. 3

FIG. 4

FIG. 5

FIG.6

FIG.7

FIG.8

FIG.9

FIG.10

FIG.11

Office européen
des brevets

**RAPPORT DE RECHERCHE EUROPEENNE**

0191704
Numero de la demande

EP 86 42 0010

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | CH-A- 440 820 (DUNAND) ----- | | A 01 K 49/00 |

**DOMAINES TECHNIQUES RECHERCHES (Int. Cl.4)**

A 01 K

Le present rapport de recherche a été établi pour toutes les revendications

| Lieu de la recherche | Date d'achevement de la recherche | Examinateur |
|---|---|---|
| LA HAYE | 21-04-1986 | VILBIG K |